Europäisches Patentamt

European Patent Office

Office européen des brevets

(19)

(11) Veröffentlichungsnummer: **0 054 760**
**B1**

(12) **EUROPÄISCHE PATENTSCHRIFT**

(45) Veröffentlichungstag der Patentschrift:
29.01.86

(21) Anmeldenummer: 81109958.9

(22) Anmeldetag: 27.11.81

(51) Int. Cl.⁴: **B 61 F 5/24,** B 61 F 5/16

(54) Lagerung für Drehgestelle von Schienenfahrzeugen.

(30) Priorität: 17.12.80 DE 3047464

(43) Veröffentlichungstag der Anmeldung:
30.06.82 Patentblatt 82/26

(45) Bekanntmachung des Hinweises auf die Patenterteilung:
29.01.86 Patentblatt 86/5

(84) Benannte Vertragsstaaten:
AT BE CH DE FR GB IT LI

(56) Entgegenhaltungen:
DE - B - 1 525 067
DE - B - 2 237 364
DE - B - 2 237 638
FR - A - 2 272 309
GB - A - 1 386 621
US - A - 4 228 741

(73) Patentinhaber: Hoesch Aktiengesellschaft,
Eberhardstrasse 12, D-4600 Dortmund 1 (DE)

(72) Erfinder: Ketschker, Walter, Dusternweg 38,
D-4780 Lippstadt (DE)
Erfinder: Marquardt, Reinhard, Gorch-Fock-Strasse 17,
D-4780 Lippstadt (DE)
Erfinder: Stenert, Alois, Ing.(grad.), Bulkeweg 3,
D-4780 Lippstadt (DE)

## Beschreibung

Die Erfindung bezieht sich auf eine geschlossene oder segmentförmige, als Kugel- oder Rollendrehverbindung ausgebildete Lagerung für Drehgestelle von Schienenfahrzeugen.

Hervorgerufen durch Störeinflüsse, ausgelöst durch den Fahrweg oder das Fahrzeug, werden Drehgestelle von Schienenfahrzeugen zu Schwingungen angeregt, die einen unruhigen Fahrzeuglauf hervorrufen. Das führt zu Verschleiss an den Schienen und an den Rädern und kann im Extremfall dazu führen, dass die Entgleisungssicherheit bei Fahrzeugen nicht mehr gegeben ist. Eine Schwergängigkeit der Drehbewegung von Drehgestellen kann hier keine Abhilfe schaffen, da während der Kurvenfahrt eine Leichtgängigkeit der Drehgestelle gefordert ist. Somit ergibt sich die Notwendigkeit, das Drehgestell während der Geradeausfahrt in der Drehbewegung zu hemmen und während der Kurvenfahrt eine leichte Drehbarkeit zu gewährleisten.

Eine derartige Drehhemmung ist bei einem rollengeführten Drehkranz nach der DE-B 2 237 638 so ausgebildet, dass während der Geradeausfahrt Gleitelemente zum Einsatz kommen und somit den Drehwiderstand erhöhen. Weiterhin sind nach der DE-B 1 525 067 und nach der DE-C 2 237 364 verschiedene Drehgestellwälzlagerungen ohne Drehhemmung – d.h. ohne Hemmung der Drehbewegung – während der Geradeausfahrt bekannt.

Des weiteren ist nach der GB-A 1 386 621 eine Schwenkbremse für Drehgestelle bekannt, die durch Federn gespannt und durch eine auf einem Nocken laufende Rolle gesteuert wird, so dass das Drehgestell während des Geradeauslaufs in seiner Drehung gehemmt ist.

Bei einer Drehgestellagerung mit mechanischer Drehhemmung durch eine Schwenkbremse bei Geradeausfahrt nach der DE-B 2 237 638 sind die Wälzlagerung und die Schwenkbremse in einem Bauraum angeordnet. Dadurch wird es nicht möglich, die Wälzlagerung durch eine Fett- oder Ölschmierung in ihrer Lebensdauer zu unterstützen. Weiterhin gerät Abrieb von der Bremsscheibe in die Laufbahn der Wälzlagerung, so dass diese dadurch zerstört wird. Zusätzlich kann diese Drehgestellagerung nur aufliegende Lasten des Wagenkastens auf das Drehgestell übertragen. Die häufig anfallenden Radiallasten und auch abhebenden Lasten können nicht übertragen werden, so dass hierfür zusätzlich Lagereinheiten vorgesehen sein müssen. Normale Drehgestellagerungen ohne Drehhemmung können derartige Kräfte übertragen.

Die GB-A 1 386 621 sieht eine zentrale Zapfenlagerung vor und besitzt zwei unabhängige Schwenkbremsen. Nachteilig bei dieser Ausführung werden bei unterschiedlichem Verschleiss der Schwenkbremsen oder Ausfall einer Schwenkbremse einseitige Kräfte und aussermittige Drehmomente auf das Drehgestell ausgeübt. Das erhöht besonders beim Überfahren von Weichen die Entgleisungsgefahr. Ausserdem ermöglicht diese Bauform nicht den Einsatz von nur einer Schwenkbremse.

Aufgabe der Erfindung ist es, eine Lagerung für Drehgestelle von Schienenfahrzeugen zu schaffen, die sämtliche Kräfte aus dem Wagenkasten in das Drehgestell gleichmässig übertragen kann, wobei das Drehgestell durch eine mechanische Schwenkbremse während der Geradeausfahrt in der Drehbewegung gehemmt wird und wobei die Wälzlagerung einwandfrei geschmiert werden kann, ohne dass Abrieb von der Bremseinheit in die Lagerbahn kommt.

Weiterhin soll gewährleistet sein, dass durch die Schwenkbremse keine aussermittigen Drehmomente in das Drehgestell eingeleitet werden.

Diese Aufgabe wird erfindungsgemäss bei einer Lagerung der eingangs beschriebenen Gattung dadurch gelöst, dass mindestens eine an sich bekannte, über Federn gespannte, durch eine auf einem Steuernocken laufende Rolle gesteuerte Schwenkbremse direkt am Umfang des Kugel- oder Rollendrehkranzes angeordnet ist, wobei ein Lageraussenring direkt mit dem den Reibbelag tragenden Reibbelaghalter und der Lagerinnenring direkt mit der den Gegenbelag tragenden Federn verbunden ist.

Um den Drehwiderstand und den Schwenkwinkel der Schwenkbremsen einstellen und den Verschleiss des Reibbelages ausgleichen zu können, ist vorteilhaft der Steuernocken einstellbar und auswechselbar. Durch die freie axiale Beweglichkeit von Schwenkbremsteilen zu den Lagerringen muss die Lagerung keine zusätzlichen axialen Bremskräfte übertragen.

Weiterhin kann mindestens eines der einem Lagerring (1. bzw. 2) zugeordneten Schwenkbremsteile (4 bzw. 9) axial zu diesem frei beweglich sein.

Die mit der Erfindung erzielten Vorteile bestehen insbesondere darin, dass das Lagerelement einer beliebigen Lagerbauform mit einer von diesen unabhängigen Drehhemmung für Geradeausfahrt versehen werden kann. Lebensdauer und Funktion der Lagerung werden durch die Schwenkbremse nicht beeinflusst. Weiterhin arbeitet die Schwenkbremse funktionsunabhängig von der Lagerung. Das heisst, sie ist nicht wie der bei der DE-B 2 237 638 von der Auflast des Wagenkastens im Drehwiderstand beeinflusst. Weiterhin wird das Fahrverhalten des Drehgestells nicht nachteilig durch aussermittige Drehmomente, hervorgerufen durch die Schwenkbremse, beeinflusst. Durch die Ausrichtbarkeit und Auswechselbarkeit des Steuernockens und damit der beliebigen Gestaltung des Steuernockenprofils ist es vorteilhaft möglich, ein beliebig dem Fahrzeug angepasstes Schwenkverhalten des Drehgestells zu erreichen. Die erfindungsgemässe Anordnung der Schwenkbremse ermöglicht nicht nur eine einwandfreie Abdichtung der Lagerung, sondern auch der Bremseinheiten gegen alle Umwelteinflüsse beim Fahrbetrieb. Weiterhin vorteilhaft können eine oder mehrere Bremseinheiten an beliebiger Stelle der Lagerung eingebaut werden. Das bringt Vorteile in der Gestaltungsfreiheit der gesamten Drehgestellagerung und in der gewünschten Stärke der Drehhemmung.

Als besonderer Vorteil ergibt sich weiterhin, dass durch die erfindungsgemässe Drehgestellagerung eine beträchtliche Fahrzeug- und Fahrwegverschleissminderung eintritt. Vorteilhaft erhöht sich auch der Fahrkomfort des Fahrzeuges und durch die geringere Geräuschemission wird die Umweltbelastung herabgesetzt.

Ein Ausführungsbeispiel der Erfindung ist in der Zeichnung schematisch dargestellt und wird im folgenden näher bschrieben. Es zeigen:

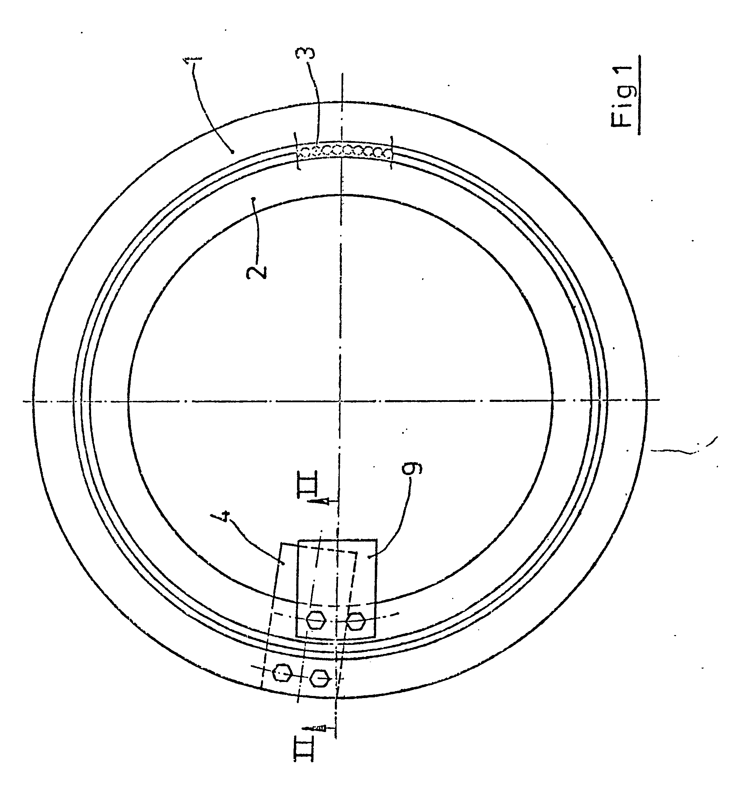

Fig. 1 ein Lager mit einer Schwenkbremse nach der Erfindung in der Draufsicht,

Fig. 2 einen Schnitt durch das Lager und die Schwenkbremse gemäss Linie II–II in Fig. 1,

Fig. 3 einen Schnitt durch die Schwenkbremse gemäss Linie III–III in Fig. 2 in der Stellung «Geradeausfahrt» und

Fig. 4 einen Schnitt entsprechend Fig. 3 in der Stellung «Kurvenfahrt».

Als Wälzlager wird im Ausführungsbeispiel ein geschlossenes Kugellager eingesetzt, das aus Lageraussenring 1, Lagerinnenring 2 und dazwischen angeordneten Wälzkörpern 3 besteht. Am Lageraussenring 1 ist ein Reibbelaghalter 4 mittels Schrauben 5 befestigt. Dieser Reibbelaghalter trägt ausserhalb des Lagerbereichs einen Reibbelag 6. Gegenüber dem Reibbelag sind am Reibbelaghalter zwei Lagerböcke 7 angeordnet, die eine Rolle 8 führen. Am Lagerinnenring 2 ist eine Feder 9 über Führungen 10 in axialer Richtung freibeweglich befestigt. Diese Feder umschliesst den Reibbelaghalter mit seinen zugehörigen Bauteilen. Als Gegenfläche zum Reibbelag 6 ist an der Feder 9 ein Gegenbelag 11 angeordnet, damit die Feder 9 nicht verschleisst.

Das freie Ende der Feder trägt einen den Steuernocken 12 führenden Nockenhalter 13. Der Steuernocken ist durch ein Gewinde im Nockenhalter in seiner Höhe einstellbar und als solcher auswechselbar. Im Ausführungsbeispiel ist der Steuernocken aus Nockenkopf 14 und Nockenschraube 15 hergestellt, die frei gegeneinander beweglich sind. Der Steuernocken kann in der Höhe verstellt werden, indem die Nockenschraube im Nockenhalter verdreht wird, und durch diese Einstellung kann die Vorspannung der Feder entsprechend den Erfordernissen eingestellt werden. Ausserdem ist es möglich, dass ein Nachstellen erfolgt, wenn der Reibbelag sich abnutzt. Sicherungselemente 16, 17 sichern die Position des Nockenkopfes. Eine Abdeckung 18 und ein Abdichtband 19 verhindern, dass Schmutz und sonstige Verunreinigungen während der Fahrt oder der Wartungsarbeiten die Funktion der Schwenkbremse beeinträchtigen können.

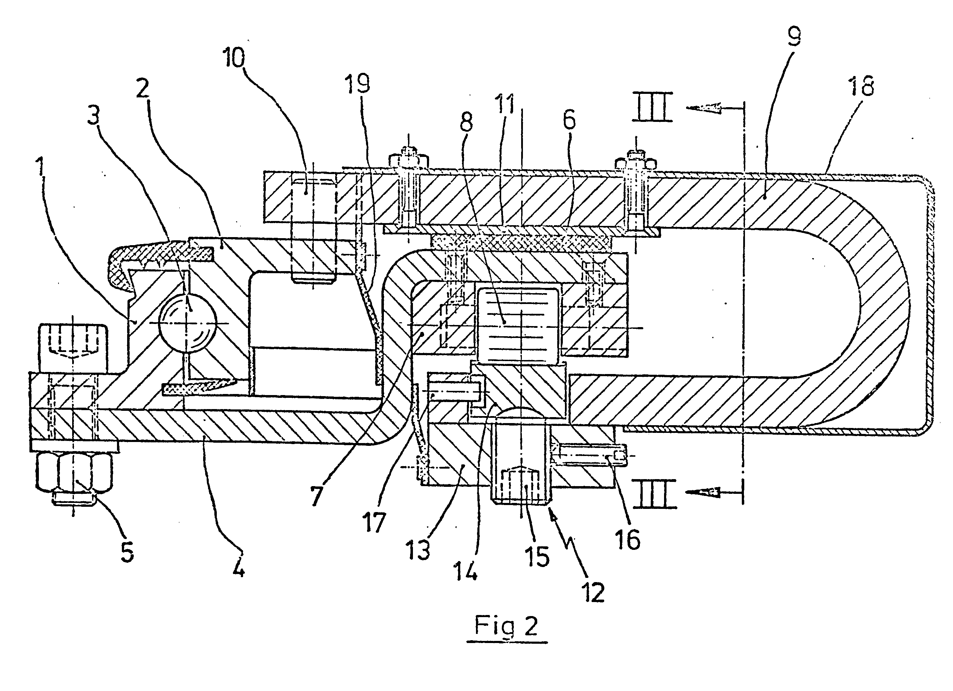

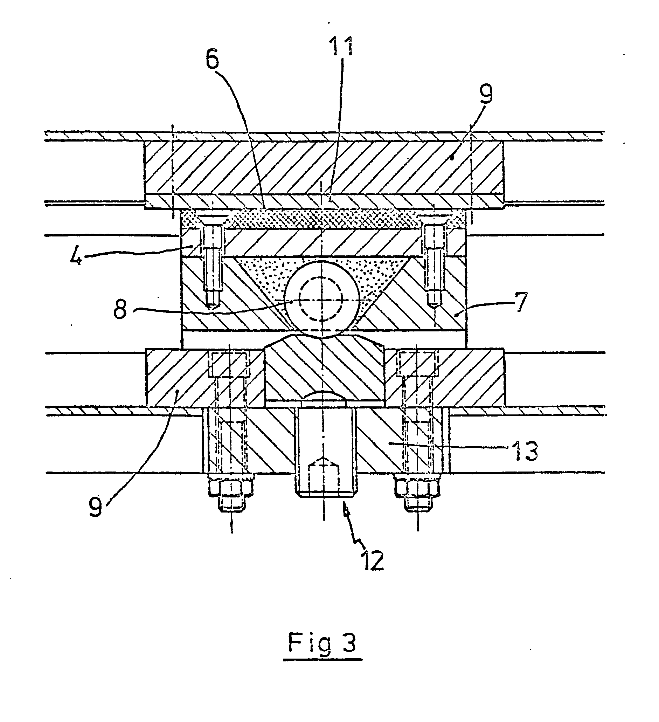

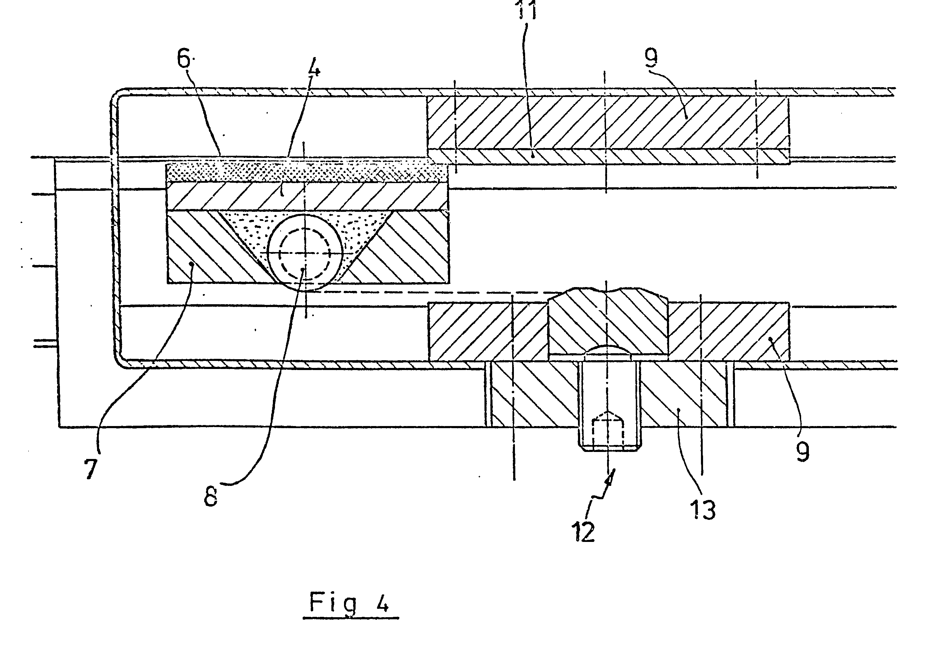

Die Fig. 3 und 4 zeigen in Verbindung mit Fig. 2 die Funktion der Schwenkbremse.

Bei Kurvenfahrt (Fig. 4) ist die Feder 9 entlastet, so dass der Reibbelag 6 nicht gegen den Gegenbelag 11 gedrückt wird. Sobald bei Geradeausfahrt die Rolle 8 auf den Steuernocken 12 läuft (Fig. 3), wird die Feder 9 gespannt. Dadurch wird mit der entsprechenden Spannkraft der Feder 9 der Reibbelag 6 gegen den Gegenbelag 11 gepresst, so dass die gewünschte Drehhemmung auftritt. Das Einpendeln des Drehgestelles kann dabei auch durch eine nicht näher bezeichnete Mittenvertiefung des Steuernockens 12 unterstützt werden.

## Patentansprüche

1. Geschlossene oder segmentförmige als Kugel- oder Rollendrehkranz ausgebildete Lagerung für Drehgestelle von Schienenfahrzeugen, dadurch gekennzeichnet, dass mindestens eine an sich bekannte, über Federn (9) gespannte, durch eine auf einem Steuernocken (12) laufende Rolle (8) gesteuerte Schwenkbremse direkt am Umfang des Kugel- oder Rollendrehkranzes angeordnet ist, wobei ein Lageraussenring (1) direkt mit dem den Reibbelag (6) tragenden Reibbelaghalter (4) und der Lagerinnenring (2) direkt mit der den Gegenbelag (11) tragenden Feder (9) verbunden ist.

2. Lagerung nach Anspruch 1, dadurch gekennzeichnet, dass der Steuernocken (12) einstellbar und auswechselbar ist.

3. Lagerung nach Anspruch 1 und 2, dadurch gekennzeichnet, dass mindestens eines der einem Lagerring (1 bzw. 2) zugeordneten Schwenkbremsteile (4 bzw. 9) axial zu diesem frei beweglich ist.

## Claims

1. Closed or segmental bearing for bogies of railway vehicles, formed as a ball or roller ring mount, characterised in that at least one swivel brake, known per se, tensioned by springs (9) and controlled by a roller (8) running on a control cam (12), is arranged directly on the periphery of the ball or roller ring mount, a bearing outer race (1) is connected directly to the friction layer carrier (4) carrying the friction layer (6) and the bearing inner race (2) is connected directly to the spring (9) carrying the counterlayer (11).

2. Bearing according to claim 1, characterised in that the control cam (12) is adjustable and interchangeable.

3. Bearing according to claims 1 and 2, characterised in that at least one of the swivel brake parts (4 or 9) associated with one bearing race (1 or 2) is freely axially movable relative to the other.

## Revendications

1. Crapaudine fermée ou segmentée réalisée sous forme d'une couronne de pivotement à billes ou à rouleaux pour bogies de véhicules ferroviaires, caractérisée en ce qu'au moins un frein de braquage en soi connu, qui est serré par ressort (9) et actionné par un galet (8) se déplaçant sur une came (12), est disposé directement à la périphérie de la couronne de pivotement à billes ou à rouleaux, une bague extérieure (1) du roulement formant la crapaudine étant reliée directement au porte-garniture (4) supportant la garniture de friction (6) et la bague intérieure (2) étant reliée directement au ressort (9) portant la contre-garniture.

2. Crapaudine selon la revendication 1, caractérisée en ce que la came (12) est réglable et interchangeable.

3. Crapaudine selon les revendications 1 et 2, caractérisée en ce que l'une au moins des parties (4, 9) du frein de braquage conjuguées à une bague (1, 2) du roulement est librement mobile par rapport à cette bague dans le sens axial.

0 054 760

Fig 1

Fig 2

0 054 760

Fig 3

Fig 4